Europäisches Patentamt

European Patent Office

Office européen des brevets

(11) Publication number: **0 066 833**
**A1**

(12) ## EUROPEAN PATENT APPLICATION

(21) Application number: **82104792.5**

(22) Date of filing: **01.06.82**

(51) Int. Cl.³: **G 01 M 3/28**, B 65 G 53/52

(30) Priority: **02.06.81 JP 80562/81**
**02.06.81 JP 80563/81**

(43) Date of publication of application: **15.12.82**
**Bulletin 82/50**

(84) Designated Contracting States: **BE DE FR GB IT NL**

(71) Applicant: **Nippon Steel Corporation,**
**6-3 Ote-machi 2-chome Chiyoda-ku, Tokyo 100 (JP)**

(72) Inventor: **Hagiwara, Takeshi c/o Nippon Steel**
**Corporation, Yawata Works 1-1-1, Edamitsu**
**Yawata-higashi-ku, Kitakyusho City Fukuoka Prefecture**
**(JP)**
Inventor: **Matsuo, Masataka c/o Nippon Steel**
**Corporation, Yawata Works 1-1-1, Edamitsu**
**Yawata-higashi-ku, Kitakyusho City Fukuoka Prefecture**
**(JP)**
Inventor: **Hamai, Kazuo c/o Nippon Steel Corporation,**
**Yawata Works 1-1-1, Edamitsu Yawata-higashi-ku,**
**Kitakyusho City Fukuoka Prefecture (JP)**

(74) Representative: **Vossius Vossius Tauchner Heunemann**
**Rauh, Siebertstrasse 4 P.O. Box 86 07 67,**
**D-8000 München 86 (DE)**

(54) **Powder conveying pipe.**

(57) A powder conveying pipe (1) comprises a pressurized-transportation pipe conveying a powdery material entrained in a conveying fluid under pressure, an enclosure (6) hermetically surrounding a bent portion (5) of the pressurized-transportation pipe, and a device (9) to detect the pressure inside the enclosure (6).

EP 0 066 833 A1

VOSSIUS · VOSSIUS · TAUCHNER · HEUNEMANN · RAUH
PATENTANWÄLTE

0066833

SIEBERTSTRASSE 4 · 8000 MÜNCHEN 86 · PHONE: (089) 47 40 75
CABLE: BENZOLPATENT MÜNCHEN · TELEX 5-29 453 VOPAT D

Our Ref.: R 891 EP                     June 1, 1982

Case:      661

NIPPON STEEL CORPORATION

Tokyo, Japan


### " Powder Conveying Pipe "


This invention relates to a powder conveying pipe, and more particularly to a powder conveying pipe having a bent portion used for the pressurized transportation of a granular or powdery mass of metal, refractories, plastics.

Because of dust pollution control regulations growing severer and increasing transportation cost, more and more granular and powdery materials have come to be transported by pressurized conveying systems rather than conveontional trucks. The carrying pipe, especially where it is bent, however, suffers heavy wear when the material conveyed is hard and relatively large in particle size. In the buildup or repair of furnace linings in the steel industry, refractory powder flame projection has been finding increasing use in place of a conventional technique known as the wet method. This technique sends forth refractory powder through gas flames. For this purpose, the refractory powder has to be entrained in a pressurized gas and transported over a long distance from its storage

0066833

point (e.g. a tank) to a burner. The conveying pipe, however, is heavily worn off by the conveyed powder impinging against it. Particularly bent pipes used in constricted sections are heavily damaged. In such places, the pipe wall breaks open to erupt the powder, as a consequence of which the lining formed cannot attain a sufficient thickness. With their experience and perception, projection operators have been preventing the development of accidents from such damaged pipes, but not to a perfectly reliable extent. The unexpected eruption of the conveyed powder scares and endangers the safety of workmen.

An object of this invention is to provide a powder conveying pipe that permits an early discovery of a wear-induced opening in the bent portion of pipe and thereby minimizes the leakage and loss of the powder conveyed and conveying fluid through the opening.

Another object of this invention is to provide a powder conveying pipe that prevents an eruption of the powder conveyed and conveying fluid through a wear-induced opening in the bent portion of pipe and thereby assures the safety of nearby workmen and equipment.

A powder conveying pipe according to this invention comprises a pressurized-transportation pipe through which powdery material is passed entrained in a pressurized conveying fluid, an enclosure hermetically surrounding the bent portion of the pressurized-transportation pipe, and a device to detect the pressure inside the enclosure.

In the powder conveying pipe of the above-described structure, the pressure inside the enclosure changes when an opening is made in its bent portion as a result of wearing. If the pressure inside the enclosure is lower than that of the conveying fluid, the fluid (sometimes together with the powder) leaks out into the enclosure to raise the pressure therein. If, conversely, a high-pressure fluid is sealed in the enclosure to keep the pressure therein higher than the pressure of the conveying fluid, the high-pressure fluid flows through the opening into the pipe, with a resulting drop in the pressure inside the enclosure. The pressure detecting device senses such pressure changes, thereby enabling an early discovery of the opening in the bent pipe.

The high-pressure fluid sealed within the enclosure is chosen from among water, oil, air and the like, depending upon the kind of the conveying fluid. For the pressure detecting device, an ordinary pressure gauge, switch or the like is used.

Capable of thus detecting the leakage from an opening in the pipe, this invention permits recovering the trouble of a transportation line or malfunction of equipment connected thereto while damage is still light.  In repairing the lining of a steelmaking furnace, for example, formation of an inappropriately thin refractory layer can be held to a minimum.

With the bent section sealed in the enclosure, the high-pressure conveying fluid and/or conveyed powder leaking through an opening in the pipe does not erupt outside. This assures the safety of nearby workmen and equipment.

Brief Description of the Drawings

Fig. 1 is a partly cross-sectional view of a powder conveying pipe according to this invention.

Fig. 2 is a cross-sectional view of another powder conveying pipe according to this invention.

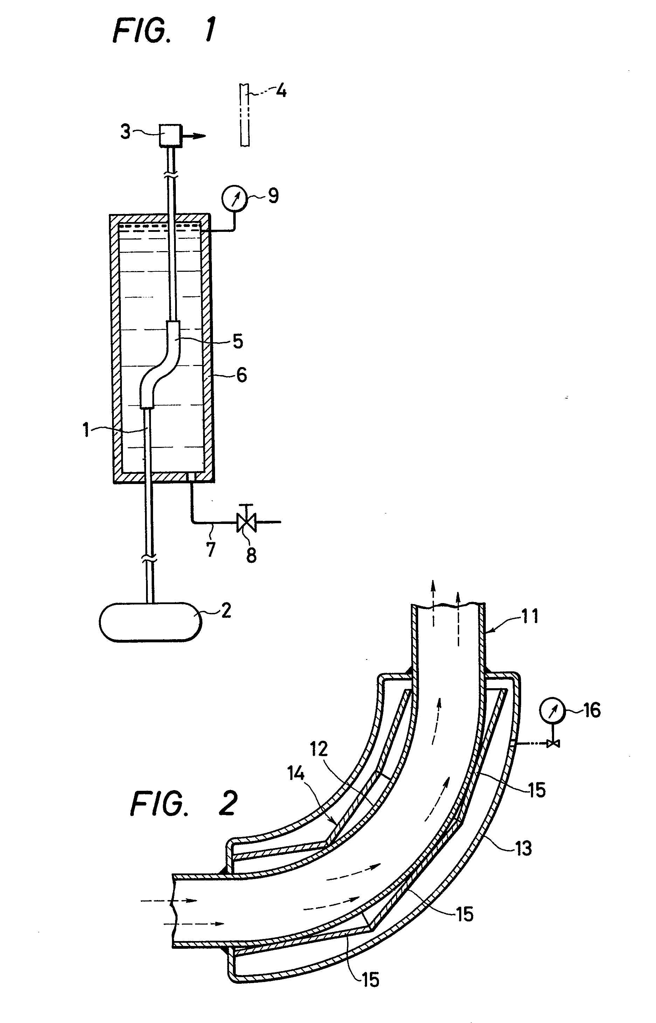

As shown in Fig. 1, a powder conveying pipe 1 connects a powder supply bin 2 and a powder flame projecting burner 3.  The powder here is a refractory material used for the repair of furnace wall 4.

The pipe 1 is compactly fitted in a powder flame projecting device (not shown), with a bend 5 being provided midway in order to adjust the distance between the burner 3 and wall 4.  This bend permits keeping the burner 3 at a desired projecting distance. The bend 5 is provided either by use of a conventional bent pipe or by bending part of the powder conveying pipe.

The bend 5 is contained in a cylindrical sealed water chamber 6 that is filled with water (here water includes solutions) under pressure. The pressure of the water is made higher than that of the conveying fluid flowing through the pipe 1. The water is supplied from a feed pipe 7. When the pressure of the water reaches a preset level, a valve 8 on the feed pipe 7 closes. A pressure gauge 9 is attached to the sealed water chamber 6 to sense the pressure of the water contained therein.

If the bent 5 breaks open as a result of wearing through a relatively long period of use, the pressurized water flows into the pipe 1 therethrough to turn the powder being conveyed into a slurry-like state. When this slurry-like powder is supplied to the burner 3, the operator will notice the irregularity from a change in the condition of flames. Meanwhile, the pressure gauge 9 tells a pressure drop within the sealed water chamber 6 and, thereby, the development of the opening in the bend 5.

The following describes some examples of the dimensions and operating condition of the powder conveying pipe according to this invention.

In one embodiment, the powder conveying pipe 1 was a 25 mm diameter steel pipe. The bend 5 was formed by bending the same steel pipe and contained in a sealed water chamber 6 of steel. A powder of alumina 99 percent, ranging between 0.01 mm and 1.0 mm in particle size, was conveyed at a rate of 200 kg/hr, entrained in oxygen under a pressure of 3.0 kg/cm. The pressure of the water in the sealed water chamber was 5.0 kg/cm$^2$.

When 3000 kg of the powder had been conveyed, the burner 3 ejected a slurry of the powder and, at the same time, a pressure drop in the sealed water chamber 6 was observed.

Fig. 2 shows another embodiment of this invention.

As illustrated, a bent portion 12 of a pressurized-transportation pipe 11 is enclosed in an hermetic pipe 13 curving therealong. Both ends of the hermetic pipe 13 are closed to keep the inside airtight.

Inside the hermetic pipe 13 is provided a separation pipe 14 in such a manner as to surround the bent portion 12. The separation pipe 14 is a multi-bent pipe consisting of a plurality of short-length pipes 15 arranged along and as close as possible to the bent portion 12. The separation pipe 14 is made of such hard wear-resistant material that it can withstand the abrasion caused by, for example, the alumina and refractory material conveyed and the high pressure of the conveying gas.

The pressure within the hermetic pipe 13 of this embodiment is equal to atmospheric. When the bent portion 12 breaks open as a result of wearing, accordingly, the powder and conveying fluid erupts from the pressurized-transportation pipe 11 into the hermetic pipe 13 to cause a pressure rise therein. This pressure increase is sensed by the pressure gauge 16 attached to the hermetic pipe 13.

In this embodiment, the powder erupting from the opening, impinging against the wall of the separation pipe 14, is kept out of direct contact with the wall of the hermetic pipe 13. This prevents the hermetic pipe 13 from being damaged even when the powder erupts from the pressurized-transportation pipe 11.

The following describes a concrete example of the operation of the powder conveying pipe in Fig. 2. The dimensions of the pipe, conveying fluid and powder conveyed were the same as those in Fig. 1. The running speed of the powder was 20 m/sec. The bent portion 12 was made of stainless steel.

When approximately 3 tons of the powder had been supplied, the bent portion 12 broke open as a result of wearing caused by the impinging alumina particles. Then, the pressure inside the hermetic pipe 13 rose to 3 $kg/cm^2$, whereby the creation of the opening was detected and the bent portion 12 was replaced.

0066833

Claims

1. A powder conveying pipe (1) comprising
   a) a pressurized-transportation pipe (11) passing a powder entrained in a conveying fluid under pressure;
   b) an enclosure (6, 13) hermetically surrounding a bent portion (5, 12) of the pressurized-transportation pipe; and
   c) means (9, 16) detecting the pressure inside the enclosure (6, 13).

2. A pipe according to claim 1, in which the enclosure (6) is filled with a fluid kept at a pressure higher than the pressure inside the pressurized-transportation pipe.

3. A pipe according to claim 1, in which a separation pipe (14) of wear-resistant material is provided inside the enclosure (13) so that it extends along and encloses the bent portion (12) of the pressurized-transportation pipe (11).

0066833

1/1

FIG. 1

FIG. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | DE-A-2 646 569 (KÜTTNER) <br> * page 1, claim 1; page 2, claim 9; page 6, lines 2-9; figures 1,2 * <br> ----- | 1,2 | G 01 M 3/28 <br> B 65 G 53/52 |

TECHNICAL FIELDS SEARCHED (Int. Cl. 3)

G 01 M
B 65 G
F 17 D

The present search report has been drawn up for all claims

| Place of search | Date of completion of the search | Examiner |
|---|---|---|
| THE HAGUE | 03-09-1982 | OSTYN T.J.M. |

EPO Form 1503. 03.82